# EUROPEAN PATENT APPLICATION

(11) **EP 2 640 101 A1**
(43) Date of publication of application: **18.09.2013**
(21) Application number: 11849452.5
(22) Date of filing: 18.10.2011
(51) Int. Cl.: H04W 4/12, H04M 3/533

(54) **METHOD AND SYSTEM FOR PROCESSING MEDIA MESSAGES**

(30) Priority: 15.12.2010 CN 201010590961
(71) Applicant: ZTE Corporation, Shenzhen, Guangdong 518057 (CN)
(72) Inventor: LU, Yan, Shenzhen Guangdong 518057 (CN); DING, Xin, Shenzhen Guangdong 518057 (CN)
(74) Representative: Modiano, Micaela Nadia
(86) International application number: PCT/CN2011/080897
(87) International publication number: WO 2012/079420

(57) **Abstract**

The present document relates to a method and system for processing multimedia message. The method includes: a sending client generating and sending multimedia message in which at least two media contents and instructions on how the media contents should be rendered are carried; a multimedia messaging server receiving the multimedia message sent by the sending client; and a recipient client fetching the multimedia message from the multimedia messaging server and presenting the media contents according to instructions. With the method and system of the present document, a new media content processing mechanism is provided.

## Description

### Technical Field

The present document relates to the field of mobile communication technology, and particularly, to a method and system for processing multimedia message.

### Background of the Related Art

Nowadays, Multimedia message services including instant message services and non-real time message services are popular with more and more users. The users can edit message containing multimedia contents such as audios, pictures and videos and so on via a message client and send the message to a recipient.

### Summary of the Invention

The technical problem required to be solved by the present document is to provide a method and system for processing multimedia message, to provide a new media content processing mechanism.

The present document discloses a multimedia message system with background sound, that is, a sending user can send a piece of multimedia message with background music, thereby improving the user experience undoubtedly.

In order to solve the above technical problem, the present document provides a method for processing multimedia message, which comprises:
a sending client generating and sending multimedia message in which at least two media contents and instructions on how the media contents should be rendered are carried;
a multimedia messaging server receiving the multimedia message sent by the sending client; and
a recipient client fetching the multimedia message from the multimedia messaging server and presenting the media contents according to the instructions.

Preferably, the media contents comprise audio data, texts, videos, pictures or images.

Preferably, the multimedia message is encoded by means of Multipurpose Internet Mail Extensions (MIME); the sending client sends the multimedia message via Simple Mail Transfer Protocol (SMTP) protocol or Internet Message Access Protocol (IMAP).

Preferably, the instructions are carried via Synchronized Multimedia Integration Language (SMIL), or the instructions are carried by parameters in the multimedia message header.

In order to solve the above technical problem, the present document further provides a method for processing multimedia message, which comprises:
a sending client sending first multimedia message in which a first media content is carried;
a multimedia messaging server receiving the first multimedia message sent by the sending client, obtaining the first media content from the first multimedia message, and generating second multimedia message which contains the first media content, a second media content, and instructions on how the first media content and the second media content should be rendered;
a recipient client fetching the second multimedia message from the multimedia messaging server and presenting the first media content and the second media content according to the instructions.

Preferably, the first media content and the second media content comprise audio data, texts, videos, pictures or images.

Preferably, the multimedia message is encoded by means of Multipurpose Internet Mail Extensions (MIME).

Preferably, the instructions are carried via Synchronized Multimedia Integration Language (SMIL), or the instructions are carried by parameters in the multimedia message header,

Preferably, the second media content is a media content pre-stored in the multimedia messaging server by a sending user possessing the sending client.

In order to solve the above technical problem, the present document further provides a system for processing multimedia message, which comprises:
a sending client, including a multimedia message generating module and a multimedia message transmission module, wherein, the multimedia message generating module is configured to generate multimedia message in which at least two media contents and instructions on how the media contents should be rendered are carried; the multimedia message transmission module is configured to send the multimedia message;
a multimedia messaging server, configured to: receive the multimedia message sent by the sending client;
a recipient client, configured to: fetch the multimedia message from the multimedia messaging server and present the media contents according to the instructions.

Preferably, the media contents comprise audio data, texts, videos, pictures or images.

Preferably, the multimedia message is encoded by means of Multipurpose Internet Mail Extensions (MIME); the sending client sends the multimedia message via Simple Mail Transfer Protocol (SMTP) protocol or Internet Message Access Protocol (IMAP).

Preferably, the instructions are carried via Synchronized Multimedia Integration Language (SMIL), or the instructions are carried by parameters in the multimedia message header.

In order to solve the above technical problem, the present document further provides a system for processing multimedia message, which comprises:
a sending client, configured to: send first multimedia message in which a first media content is carried;
a multimedia messaging server, including a first multimedia message receiving-and-analyzing module, a second multimedia message generating module and a second multimedia message transmission module, wherein, the first multimedia message receiving-and-analyzing module is configured to: receive the first multimedia message sent by the sending client, and obtain the first media content from the first multimedia message; the second multimedia message generating module is configured to: generate second multimedia message which contains the first media content, a second media content, and instructions on how the first media content and the second media content should be rendered; the second multimedia message transmission module is configured to: send the second multimedia message to a recipient client;
the recipient client, configured to: fetch the second multimedia message from the multimedia messaging server and present the first media content and the second media content according to the instructions.

Preferably, the first media content and the second media content comprise audio data, texts, videos, pictures or images.

Preferably, the instructions are carried via Synchronized Multimedia Integration Language (SMIL), or the instructions are carried by parameters in the multimedia message header.

Preferably, the second media content is a media content pre-stored in the multimedia messaging server by a sending user possessing the sending client.

In order to solve the above technical problem, the present document further provides a method for processing multimedia message, which comprises:
a caller terminal recording voice message into a callee's voice mailbox server by means of real-time recording;
the callee's voice mailbox server generating multimedia message in which the voice message, background media and instructions on how the voice message and the background media should be rendered are carried;
a callee terminal fetching the multimedia message from the callee's voice mailbox server and presenting the voice message and the background media according to the instructions.

Preferably, the background media comprise audio data, texts, videos pictures or images.

Preferably, the multimedia message is encoded by means of Multipurpose Internet Mail Extensions (MIME); a sending client sends the multimedia message via Simple Mail Transfer Protocol (SMTP) protocol or Internet Message Access Protocol (IMAP).

Preferably, the instructions are carried via Synchronized Multimedia Integration Language (SMIL), or the instructions are carried by parameters in the multimedia message header.

In order to solve the above technical problem, the present document further provides a system for processing multimedia message, which comprises:
a caller terminal, configured to: record voice message into a callee's voice mailbox server by means of real-time recording;
the callee's voice mailbox server, configured to: generate multimedia message in which the voice message, background media and instructions on how the voice message and the background media should be rendered are carried;
a callee terminal, configured to: fetch the multimedia message from the callee's voice mailbox server and present the voice message and the background media according to the instructions.

Preferably, the background media comprise audio data, texts, videos pictures or images.

Preferably, the multimedia message is encoded by means of Multipurpose Internet Mail Extensions (MIME); a sending client sends the multimedia message via Simple Mail Transfer Protocol (SMTP) protocol or Internet Message Access Protocol (IMAP).

Preferably, the instructions are carried via Synchronized Multimedia Integration Language (SMIL), or the instructions are carried by parameters in the multimedia message header.

Compared with the related art, the method and system of the example of the present document provide a flexible multimedia message processing mechanism.

### Brief Description of Drawings

FIG. 1 is a schematic diagram of the example 1 of the method for processing multimedia message according to the present document.
FIG. 2 is a schematic diagram of the example 2 of the method for processing multimedia message according to the present document.
FIG. 3 is a schematic diagram of the module structure of the example 1 of the system for processing multimedia message according to the present document.
FIG. 4 is a schematic diagram of the module structure of the example 2 of the system for processing multimedia message according to the present document.

### Preferred Embodiments of the Invention

The present document will be described in detail with reference to the accompanying drawings below and in combination with the examples below. It should be noted that the examples in the present document and the characteristics in the examples can be combined with each other in the condition of no conflict.

### Example 1

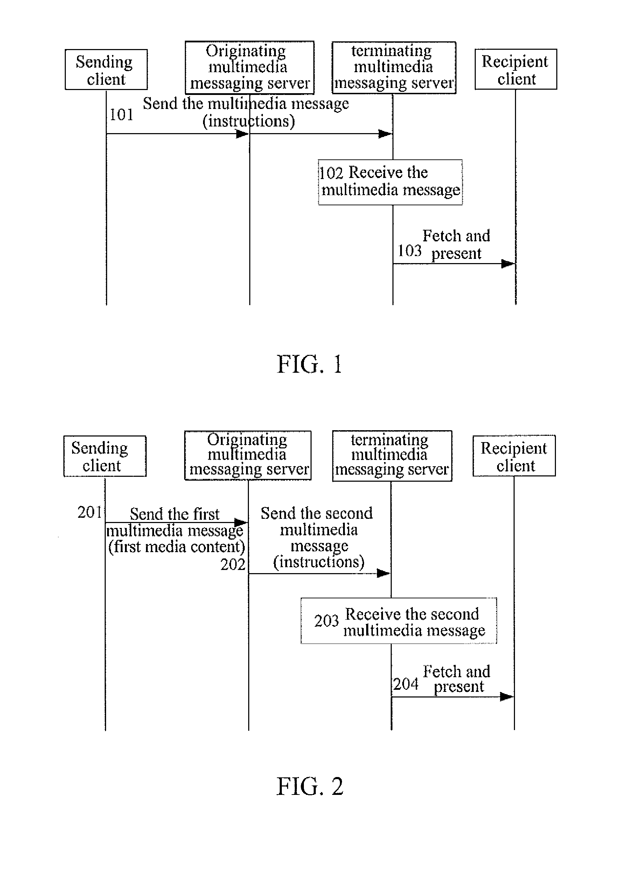

In the example I, a multimedia message sending client (hereinafter referred to as a sending client) generates multimedia message carrying instructions, and as shown in FIG. 1, the example includes the following steps.

In step 101, a sending client generates and sends a multimedia message, and the multimedia message carries at least two media contents and instructions on how the media contents should be rendered.

Here, the media contents can be audios, pictures, images, texts or videos, wherein the audios also can be audios going through audio mixing processing. In order to satisfy specific play modes such as a play order and a major and minor play relationship and so on between the media contents, the multimedia message also carries the instructions on how the media contents should be rendered. The instructions can use a markup language such as Synchronized Multimedia Integration Language (SMIL) to indicate which media content is a main audio, which media content is a background audio and a play order between all media contents and so on, or the instructions can be carried by parameters in a multimedia message header field.

The multimedia message is encoded by means of Multipurpose Internet Mail Extensions (MIME) ultimately.

The sending client can send the ultimately coded multimedia message in the following two ways.

In way 1, the sending client sends the coded multimedia message via a Simple Mail Transfer Protocol (SMTP) protocol SEND instruction, and the multimedia message is received by a multimedia messaging server to which the multimedia message belongs.

In way 2, the sending client establishes an Internet Message Access Protocol 4 (IMAP4) link between the sending client and a server to which the sending client belongs through an IMAP4 client, and sends the multimedia message via IMAP4 extended instruction such as a sending instruction which can be named as DELIVER, and the multimedia message is received by the multimedia messaging server to which the multimedia message belongs.

In step 102, a terminating multimedia messaging server receives the multimedia message.

The originating multimedia messaging server to which the sending user belongs can transmit voice data to the terminating multimedia messaging server to which the recipient belongs via the SMTP.

In step 103, a recipient client fetches the multimedia message from the terminating multimedia messaging server and presents the media contents according to the instructions.

The recipient client can fetch all or part of contents of the multimedia message via the FETCH command specified in IMAP protocol.

If the markup language part, i.e. SMIL, is carried, presentation is performed according to the instructions, if present, after the SMIL part is parsed (e.g. a certain audio medium is taken as a background audio to be processed).

If the instructions are carried by parameters in the multimedia message header, presentation is performed according to the instructions.

The above example 1 is implemented based on the multimedia messaging server, and it also can be certainly implemented by the servers (including an agent server) which can implement the above functions of receiving and sending the multimedia message, and this kind of servers is uniformly called as the multimedia messaging server in the present document. The key point of the present document is using the instructions to present all the media contents. It is the same case in the following examples.

### Example 2

In the example 2, an originating multimedia messaging server generates multimedia message carrying instructions, and as shown in FIG. 2, the example includes the following steps.

In step 201, a sending client sends a first multimedia message in which a first media content is carried.

The first multimedia message is encoded by means of Multipurpose Internet Mail Extensions (MIME), and the first multimedia message can contain message contents (i.e. voice media) of a user.

In step 202, the originating multimedia messaging server receives the first multimedia message sent by the sending client, extracts the first media content, and generates a second multimedia message, and the second multimedia message carries the first media content, a second media content, and instructions on how the first media content and the second media content should be rendered.

Here, the media contents can be audios, pictures, images, texts or videos, wherein the audios also can be audios going through audio mixing processing. In order to satisfy specific play modes such as a play order and a major and minor play relationship and so on between the media contents, the multimedia message also carries the instructions on how the media contents should be rendered. The instructions can use a markup language such as an SMIL to indicate which media content is a main audio, which media content is a background audio and a play order between all media contents and so on. The second multimedia message is encoded by means of Multipurpose Internet Mail Extensions (MIME) ultimately. Or the instructions can be carried by parameters in the multimedia message header field.

The originating multimedia messaging server can use an SMTP transmission protocol to send the multimedia message.

In step 203, a terminating multimedia messaging server receives the second multimedia message sent by the originating multimedia messaging server.

In step 204, a recipient client fetches the second multimedia message from the terminating multimedia messaging server and presents the first media content and the second media content according to the instructions.

The recipient client can fetch all or part of contents of the multimedia message via the FETCH command specified in IMAP protocol. The recipient client establishes a link between the recipient client and a multimedia messaging server to which the recipient belongs through an IMAP4 client, and the recipient client downloads the multimedia message from the server to a local recipient client through the Fetch command. A local terminal decodes the MIME multimedia message, and extracts the first media content and the second media content.

In the above example, the recipient client can fetch the synthetic voice message in the following way.

The recipient client accesses the multimedia messaging server through a Multimedia message client, the recipient establishes a link between the recipient and the multimedia messaging server to which the recipient belongs through the Internet Message Access Protocol 4 (IMAP4) client, and the recipient downloads the multimedia message from the server to the local recipient client through the Fetch comnand. The local terminal decodes the MIME and performs extraction.

Alterably, the function of generating the multimedia message carrying the instructions also can be implemented in the terminating multimedia messaging server.

In the example 2, the sending client and the recipient client belong to different multimedia messaging servers, and certainly, the sending client and the recipient client also may belong to the same multimedia messaging server. A feature of the example 2 is that the multimedia messaging server generates the multimedia message carrying the instructions.

The above example 2 is implemented based on the multimedia messaging server, and it also can be certainly implemented by the servers (including an agent server) which can implement the above functions of receiving and sending the multimedia message, and this kind of servers is uniformly called as the multimedia messaging server in the present document. The key point of the present document is using the instructions to present all the media contents, and a way of addressing and routing of the multimedia message will not be focused in the present document.

### Example 3

The example is implemented based on the existing voice mailbox architecture, and the following steps are specifically included.

In step 301, a caller terminal records voice messages into a callee's voice mailbox server by means of real-time recording.

The caller terminal calls a callee via the current mobile communication technology, when it is required to leave a message, for example, when it is not available to reach the callee, the signaling path makes the message to be transferred to a voice mailbox server to which a callee belongs, and the voice message is transmitted to the callee's voice mailbox server for storage by making a voice call or a way of real-time recording, and message recording is performed on the terminal and the server terminal.

In step 302, the callee's voice mailbox server receives the voice messages and generates multimedia message, the voice message is a part of contents of the multimedia message, and instructions is used to indicate a certain audio as background music of another audio in the multimedia message.

The background music means audio media used as the background, and it may refer to not only the music.

The background media mentioned in the present document includes the background music, and also can include one or multiple media data presented in accompanying, such as texts, pictures and images. It is the same case in the following examples.

The multimedia message can include the voice message, the background music and instructions of association between the voice messages and the background music. When the voice message is presented, one or multiple media data presented in accompanying, such as the background music, texts, pictures and images and so on, can be set through the instructions. The instructions mean using a markup language such as Synchronized Multimedia Integration Language (SMIL) to indicate which multimedia are the background media. Or the instructions can be carried by parameters in the multimedia message header field.

The multimedia message (or called as message) ultimately sent to the recipient also may include other multimedia contents such as texts, pictures and images and so on besides the voice message. The multimedia message is encoded by means of Multipurpose Internet Mail Extensions (MIME) ultimately.

In step 303, a callee terminal fetches the multimedia message from the callee's voice mailbox server and presents the voice message and the background media according to the instructions.

The callee terminal can fetch all or part of contents of the multimedia message via the Fetch command specified in IMAP protocol.

When the multimedia message contains the instructions, the callee terminal presents the voice message synchronously according to the instructions. A specific way can be that presentation is performed according to the instructions after the SMIL is parsed if the markup language part, i.e. SMIL, is carried (e.g. a certain audio medium is taken as a background audio to be processed).

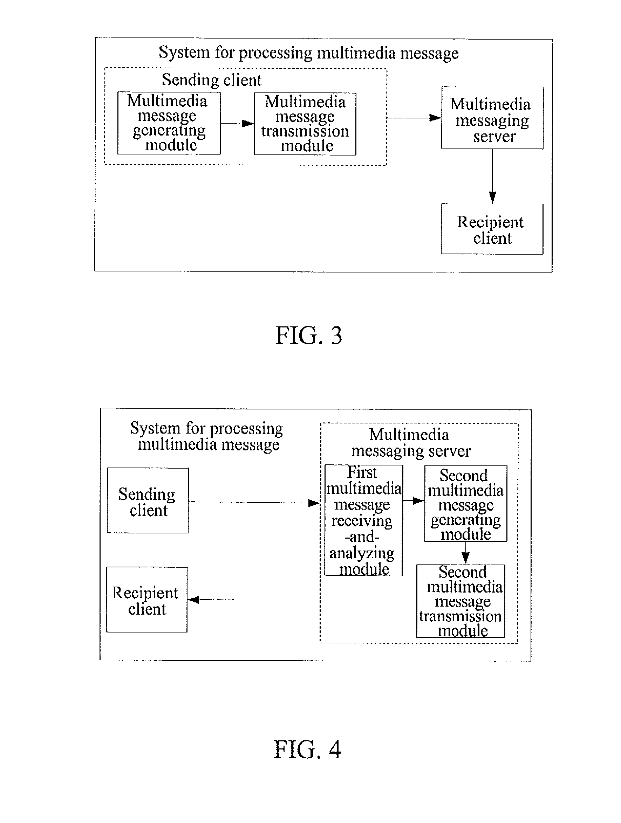

As shown in FIG. 3, a system for processing multimedia message corresponding to the example 1 includes:
a sending client, including a multimedia message generating module and a multimedia message transmission module, wherein, the multimedia message generating module is used to generate multimedia message, and the multimedia message carries at least two media contents and instructions on how the media contents should be rendered; and the multimedia message transmission module is used to send the multimedia message;
a multimedia messaging server, used to receive the multimedia message sent by the sending client
a recipient client, used to fetch the multimedia message from the multimedia messaging server and present the media contents according to the instructions

The media contents include audio data, texts, videos, pictures or images.

The multimedia message is encoded by means of Multipurpose Internet Mail Extensions (MIME); the sending client sends the multimedia message via Simple Mail Transfer Protocol (SMTP) protocol or an Internet Message Access Protocol (IMAP) extended sending instruction.

The instructions are carried via Synchronized Multimedia Integration Language (SMIL), or the instructions are carried by parameters in the multimedia message header.

As shown in FIG. 4, a system for processing multimedia message corresponding to the example 2 includes:
a sending client, used to send a first multimedia message in which a first media content is carried;
a multimedia messaging server, including a first multimedia message receiving-and-analyzing module, a second multimedia message generating module and a second multimedia message transmission module, wherein, the first multimedia message receiving-and-analyzing module is used to receive the first multimedia message sent by the sending client, and obtain the first media content from the first multimedia message; the second multimedia message generating module is used to generate second multimedia message, and the second multimedia message carries the first media content, a second media content, and instructions on how the first media content and the second media content should be rendered; the second multimedia message transmission module is used to send the second multimedia message to a recipient client;
the recipient client, used to fetch the second multimedia message from the multimedia messaging server and present the first media content and the second media content according to the instructions.

The first media content and the second media content include audio data, texts, videos, pictures or images.

the instructions are carried via Synchronized Multimedia Integration Language (SMIL), or the instructions are carried by parameters in the multimedia message header field.

Though general multimedia message is taken as an example in the above examples and the messages can be processed corresponding to voice mailbox services, the scheme disclosed in the present document is universal.

A system for processing multimedia message corresponding to the example 3 includes:
a caller terminal, used to record voice message into a callee's voice mailbox server by means of real-time recording;
the callee's voice mailbox server, used to generate multimedia message in which the voice message, background media and instructions on how the voice message and the background media should be rendered are carried;
a callee terminal, used to fetch the multimedia message from the callee's voice mailbox server and present the voice messages and the background media according to the instructions.

The background media include audio data, texts, videos pictures or images.

The multimedia message is encoded by means of Multipurpose Internet Mail Extensions (MIME); a sending client sends the multimedia message via Simple Mail Transfer Protocol (SMTP) protocol or Internet Message Access Protocol (IMAP).

The instructions are carried via Synchronized Multimedia Integration Language (SMIL), or the instructions are carried by parameters in the multimedia message header field.

The terminal mentioned above means a physical entity for operating a mailbox client. Generally, one multimedia message client such as a voice mailbox client can be operated on one physical entity, thus, if there is no special description, sending to a specific terminal also refers to sending to the multimedia message client such as a voice message client which operates on the terminal in the present document.

The person with ordinary-level technical skill in this field can understand that all or part of the steps in the above method can be completed by a program instructing related hardware, and the program can be stored in a computer readable memory medium, such as a read-only memory, disk or optical disk and so on. Alternatively, all or part of the steps of the above example also can be implemented by using one or multiple integrated circuits. Correspondingly, each module/unit in the above examples can be implemented in a form of hardware, and also can be implemented in a form of software function module. The present document is not limited to any combination of hardware and software in a specific form.

The above description is only the preferred examples of the present document, which is not used to limit the present document. The present document can have various modifications and changes for the skilled in the field. All the modifications, equivalent substitutions, and improvements, etc. made within the spirit and principle of the present document shall fall into the protection scope of the claims appended to the present document.

### Industrial Applicability

Compared with the current technology, the method and system of the example of the present document provide a flexible multimedia message processing mechanism.

## Claims

1. A method for processing multimedia message, comprising:
a sending client generating and sending multimedia message in which at least two media contents and instructions on how the media contents should be rendered are carried;
a multimedia messaging server receiving the multimedia message sent by the sending client; and
a recipient client fetching the multimedia message from the multimedia messaging server and presenting the media contents according to the instructions.

2. The method according to claim 1, wherein, the media contents comprise audio data, texts, videos, pictures or images.

3. The method according to claim 1, wherein, the multimedia message is encoded by means of Multipurpose Internet Mail Extensions (MIME); the sending client sends the multimedia message via Simple Mail Transfer Protocol (SMTP) protocol or Internet Message Access Protocol (IMAP).

4. The method according to claim 1, wherein, the instructions are carried via Synchronized Multimedia Integration Language (SMIL), or the instructions are carried by parameters in the multimedia message header.

5. A method for processing multimedia message, comprising:
a sending client sending first multimedia message, wherein the first multimedia message carries a first media content;
a multimedia messaging server receiving the first multimedia message sent by the sending client, obtaining the first media content from the first multimedia message, and generating second multimedia message which contains the first media content, a second media content, and instructions on how the first media content and the second media content should be rendered;
a recipient client fetching the second multimedia message from the multimedia messaging server and presenting the first media content and the second media content according to the instructions.

6. The method according to claim 5, wherein, the first media content and the second media content comprise audio data, texts, videos, pictures or images.

7. The method according to claim 5, wherein, the multimedia message is encoded by means of Multipurpose Internet Mail Extensions (MIME).

8. The method according to claim 5, wherein, the instructions are carried via Synchronized Multimedia Integration Language (SMIL), or the instructions are carried by parameters in the multimedia message header.

9. The method according to claim 5, wherein, the second media content is a media content pre-stored in the multimedia messaging server by a sending user possessing the sending client.

10. A system for processing multimedia message, comprising:
a sending client, including a multimedia message generating module and a multimedia message transmission module, wherein, the multimedia message generating module is configured to generate multimedia message in which at least two media contents and instructions on how the media contents should be rendered are carried; the multimedia message transmission module is configured to send the multimedia message;
a multimedia messaging server, configured to: receive the multimedia message sent by the sending client;
a recipient client, configured to: fetch the multimedia message from the multimedia messaging server and present the media contents according to the instructions.

11. The system according to claim 10, wherein, the media contents comprise audio data, texts, videos, pictures or images.

12. The system according to claim 10, wherein, the multimedia message is encoded by means of Multipurpose Internet Mail Extensions (MIME); the sending client sends the multimedia message via Simple Mail Transfer Protocol (SMTP) protocol or Internet Message Access Protocol (IMAP).

13. The system according to claim 10, wherein, the instructions are carried via Synchronized Multimedia Integration Language (SMIL), or the instructions are carried by parameters in the multimedia message header.

14. A system for processing multimedia message, comprising:
a sending client, configured to: send first multimedia message in which a first media content is carried;
a multimedia messaging server, including a first multimedia message receiving-and-analyzing module, a second multimedia message generating module and a second multimedia message transmission module, wherein, the first multimedia message receiving-and-analyzing module is configured to: receive the first multimedia message sent by the sending client, and obtain the first media content from the first multimedia message; the second multimedia message generating module is configured to: generate second multimedia message which contains the first media content, a second media content, and instructions on how the first media content and the second media content should be rendered; the second multimedia message transmission module is configured to: send the second multimedia message to a recipient client;
the recipient client, configured to: fetch the second multimedia message from the multimedia messaging server and present the first media content and the second media content according to the instructions.

15. The system according to claim 14, wherein, the first media content and the second media content comprise audio data, texts, videos, pictures or images.

16. The system according to claim 14, wherein, the instructions are carried via Synchronized Multimedia Integration Language (SMIL), or the instructions are carried by parameters in the multimedia message header.

17. The system according to claim 14, wherein, the second media content is a media content pre-stored in the multimedia messaging server by a sending user possessing the sending client.

18. A method for processing multimedia message, comprising:
a caller terminal recording voice message into a callee's voice mailbox server by means of real-time recording;
the callee's voice mailbox server generating multimedia message in which the voice message, background media and instructions on how the voice messages and the background media should be rendered are carried;
a callee terminal fetching the multimedia message from the callee's voice mailbox server and presenting the voice message and the background media according to the instructions.

19. The method according to claim 18, wherein, the background media comprise audio data, texts, videos pictures or images.

20. The method according to claim 18, wherein, the multimedia message is encoded by means of Multipurpose Internet Mail Extensions (MIME); a sending client sends the multimedia message via Simple Mail Transfer Protocol (SMTP) protocol or Internet Message Access Protocol (IMAP).

21. The method according to claim 18, wherein, the instructions on how the media contents should be rendered are carried via Synchronized Multimedia Integration Language (SMIL), or the instructions are carried by parameters in the multimedia message header.

22. A system for processing multimedia message, comprising:
a caller terminal, configured to: record voice message into a callee's voice mailbox server by means of real-time recording;
the callee's voice mailbox server, configured to: generate a multimedia message in which the voice message, background media and instructions on how the voice message and the background media should be rendered are carried;
a callee terminal, configured to: fetch the Multimedia message from the callee's voice mailbox server and present the voice message and the background media according to the instructions.

23. The system according to claim 22, wherein, the background media comprise audio data, texts, videos pictures or images.

24. The system according to claim 22, wherein, the multimedia message is encoded by means of Multipurpose Internet Mail Extensions (MIME); a sending client sends the multimedia message via Simple Mail Transfer Protocol (SMTP) protocol or Internet Message Access Protocol (IMAP).

25. The system according to claim 22, wherein, the instructions are carried via Synchronized Multimedia Integration Language (SMIL), or the instructions are carried by parameters in the multimedia message header.
